Europäisches Patentamt

European Patent Office

Office européen des brevets

(11) Publication number: **0 351 430 B1**

(12) **EUROPEAN PATENT SPECIFICATION**

(45) Date of publication of patent specification: **04.05.94**    (51) Int. Cl.⁵: **G01M 7/00**

(21) Application number: **88901322.3**

(22) Date of filing: **02.02.88**

(86) International application number:
**PCT/JP88/00092**

(87) International publication number:
**WO 89/07249 (10.08.89 89/18)**

(54) **IMPACT-TYPE APPARATUS FOR INSPECTING STRUCTURES.**

(43) Date of publication of application:
**24.01.90 Bulletin  90/04**

(45) Publication of the grant of the patent:
**04.05.94 Bulletin  94/18**

(84) Designated Contracting States:
**FR**

(56) References cited:
| | |
|---|---|
| EP-A- 0 076 864 | WO-A-87/07378 |
| DE-A- 3 620 638 | GB-A- 2 083 913 |
| JP-A- 5 931 447 | JP-A- 6 078 326 |
| JP-A-60 211 326 | JP-B- 5 614 179 |
| US-A- 4 289 023 | US-A- 4 479 386 |
| US-A- 4 519 245 | US-A- 4 542 639 |
| US-A- 4 682 490 | |

PATENT ABSTRACTS OF JAPAN, vol. 9, no. 151 (P-367)[1874], 26th June 1985; & JP-A-60 29 660

PATENT ABSTRACTS OF JAPAN, vol. 10, no. 140 (P-458)[2197], 23rd May 1986; & JP-A-60 260 852

(73) Proprietor: **MITSUI ENGINEERING & SHIPBUIL-DING CO., LTD**
**6-4 Tsukiji 5-chome, Chuo-ku**
**Tokyo 104(JP)**

(72) Inventor: **MITSUHASHI, Kunihiro**
**1588-107, Nagao**
**Tamano-shi**
**Okayama-ken 706-01(JP)**
Inventor: **JYOMUTA, Chihiro**
**19-117, Higashi Koyodai 1-chome**
**Tamano-shi**
**Okayama-ken 706-01(JP)**
Inventor: **OKA, Fujio**
**14-1-204, Wada 5-chome**
**Tamano-shi**
**Okayama-ken 706(JP)**
Inventor: **NISHIKAWA, Hidetoshi**
**33-12, Masago 5-chome**
**Chiba-shi**
**Chiba-ken 260(JP)**

(74) Representative: **Kohn, Armand c/o S.A. FEDIT-LORIOT ET AUTRES et al
CONSEILS EN PROPRIETE INDUSTRIELLE
38, avenue Hoche
F-75008 Paris (FR)**

**Description**

Technical Field

The present invention relates to an apparatus for inspecting the condition inside a structure to be inspected, by applying an impact by a hammer to a surface portion of the structure or the like.

Background Art

It is known that where an object involves a change in its internal structure, for example its thickness is not even or it includes a support or column inside, a change occurs in the sound it produces when its surface portion is hit. This is because, while the object undergoes vibration and produces sounds as it is subjected to impact force applications, the frequency and the waveform of the sound it generates undergo changes in accordance with changes in the rigidity and the density of the object having changes in its internal structure. This phenomenon takes place also where such as a peeled portion and a crack are present inside the object. Thus, it has been practiced in the art to make use of this phenomenon and inspect an internal defect in an object by applying an impact force to the object and examining the sounds then generated.

Generally, such impact-type inspections of objects are carried out by a skilled inspector in a manner such that the inspector applies striking at a variety of points on an object to be inspected, using a small-sized hammer exclusively for striking, such as a one called a test hammer and a one called a coin tap hammer, and the inspector exercising his or her acoustic organ, detects a change in the sounds then generated. Inspection methods of this type are widely relied on in for example the peeling or exfoliation inspection in honeycomb boards or plates, the peeling inspection of tiles, the crack generation inspection in concrete-placed objects or in various materials, the float inspection of decorative cement mortar on surfaces of concrete bodies, the locational detection of pillars, ribs, cores or the like present internal to or behind for example wall plates.

However, the above conventionally known impact-type inspection methods involve various shortcomings and difficulties such as (1) structural defects cannot or can hardly be detected unless the inspection is done by a skilled inspector; (2) in carrying out the inspection over a broad area, it becomes increasingly difficult to effect the detection of defects as the inspection is continued increasingly for a long period of time and as the inspector's nerves then become increasingly fatigued; (3) where an abnormal part is present relatively distant from a normal part in an object to be inspected, it tends to occur that the inspector cannot keep in memory a sound which the inspector has previously detected, when the inspector can no longer make the required judgment; (4) where an object to be inspected is located in a dangerous place and is not accessible, it is infeasible to operate the inspection; (5) the inspection operation cannot be automated; and (6) the inspection cannot be carried out at noisy sites or places.

Then, it has already been devised in the art to mechanize the inspection relied on manual operations, and there have been proposed impact-type inspection apparatus in which a hammer is mechanically driven, sounds generated from an object to be inspected are converted to electric signals by a microphone and subjected to a frequency analysis, and judgment of timbres is made by means of a speech recognition to effect the inspection of abnormalities in the object.

As can be readily perceived from the foregoing, the conventional impact-type inspection apparatus are designed to effect discrimination between a normal part and an abnormal part in an object by a frequency analysis or a judgment of timbres relying on a speech or sound recognition means, so that the inspection operations have to be complex and, in addition, it is required to alter the standard or criterion for the judgment in carrying out inspections of different objects. Thus, there exists a demand for improving the known inspection methods and apparatus.

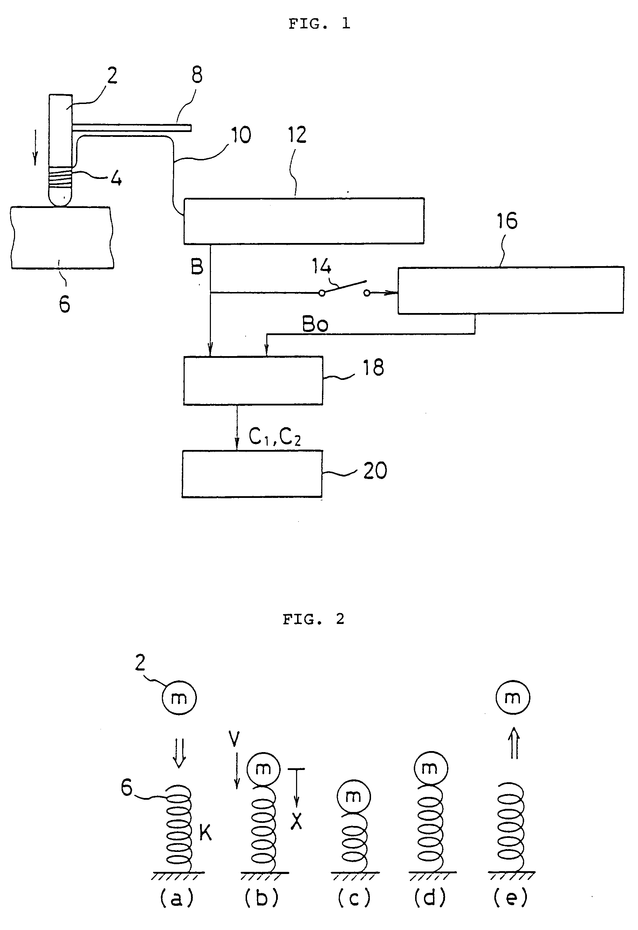

For example, according to the slackness detecting method and device disclosed in Japanese patent application Kokai publication No. 60-29660, laminated iron cores in an electric motor or the like are hit in a non-destructive way by a hand hammer provided with a force detecting sensor, and by calculating the ratio of a time from a trigger level to a maximum value and a time from the maximum value to the trigger level of output signals from the force detecting sensor, a slackness condition of the laminated iron cores or the like is determined and displayed. Now, with reference to Fig. 1 of the accompanying drawings a brief description will be entered into a structure inspection apparatus which makes use of such hand hammer.

Fig. 1 is a schematic view, showing a structure inspection apparatus utilizing a hand operable hammer. As illustrated, the apparatus includes a hammer 2 for striking or hitting, which is provided with a force detecting sensor 4 or an acceleration detecting sensor, of which while the force detecting sensor 4 is

3

preferably equipped close to the front or leading end of the hammer 2, the acceleration detecting sensor may be disposed on any portion of the hammer.

Further, the hammer 2 may comprise either an automatic hammer which can automatically apply impact forces to an object to be inspected 6 or a hand operable hammer. In Fig. 1, the reference numeral 8 denotes a handle of the hammer and the numeral 10 represents a lead wire for detection signals.

Electric signals of a pulse waveform detected by the force detectig sensor 4 are introduced in the first place into a pulse length calculation circuit 12 and thereby converted into voltages proportional to the pulse lengths, shown by B values, or into digital signals.

Preparatively, a B value detected at the time when the hammer 2 strikes a normal part in a structure may be kept in memory in a reference pulse length memory 16 by operating a switch 14 to issue a necessary direction. This memorized reference value may be referred to as $B_0$.

In operating the intended inspection, then, the value B determined of the signals of the pulse length and the reference value Bo are introduced into a comparator circuit 18, and the difference $C_1$ between the two values, namely $C_1 = B - B_0$, a ratio $C_2$ of B to $B_0$, namely $C_2 = B/B_0$, or a ratio $C_3$ of $B - B_0$ to $B_0$, namely $C_3 = (B - B_0)/B_0$ is calculated.

Any of the above values $C_1$, $C_2$ and $C_3$ may be put into a display device 20, and changes from a normal value are made perceivable by any of the emission of light or sound and the display of any of numerical values, letters and symbols.

The inspection of an object to be inspected, namely the judgment as to whether the object involves an abnormality, according to the present embodiment having the above described features, can be carried out by detecting and determining the contact time of the hammer head with the object. This possibility is realizable for the following reasons ascertained by the inventors of the present invention.

Assuming that the mass of the hammer 2 for imparting impact forces to the object to be inspected 6 is m and that the object 6 rebounding the hammer 2 comprises a spring having a spring constant K, the behavior of the hammer 2 during the time when the hammer 2 commences contact with the object 6 and it then leaves the object 6 can be illustrated by modelling as in Fig. 2. If the displacement of the hammer 2 after it contacted the object 6 is x, then the equation of motion of the hammer is:

$$m \frac{d^2x}{dt^2} + Kx = 0 \quad \dots\dots\dots\dots\dots\dots \quad (1)$$

wherein t is the time and d shows differential.

If at the time when x = 0 and t = 0, that is to say, at the moment the hammer contacts the object, the velocity of the hammer is V, then:

$$x = (V/\omega_0)\sin \omega_0 t \quad (2)$$

wherein $\omega_0 = \sqrt{K/m}$.

Thus, the force F acting on the hammer is:

$$F = Kx = (KV/\omega_0)\sin \omega_0 t \quad (3).$$

Also, the acceleration of the hammer,

$$A = \frac{d^2x}{dt^2},$$

comes to be

$$A = - V\omega_0 \sin \omega_0 t \quad (4).$$

On the other hand, the time T during which the hammer keeps contact with the object is the time during which the hammer moves the distance of the displacement x and returns to the original position, and from the above equation (2) at the time when x = 0, it is shown by:

$$T = \pi/\omega_{\emptyset} = \pi\sqrt{m/K} \qquad (5)$$

wherein $\pi$ is the ratio of the circumference of a circle to its diameter.

Thus, the time of the contact together of the hammer and the object is variable depending on the mass of the hammer and the spring constant K of the object. That is to say, if the mass of the hammer is constant, then the contact time T of the hammer with the object depends on the spring constant of the object, and now that where the object involves a defect or an abnormaility, the spring constant at the location of the defect or abnormality shows a change, it is possible to find whether the object involves a defect or an abnormality by detecting or measuring the contact time T of the hammer and the object.

It is obvious that while the force F shown by the above equation (3) and the acceleration A shown by the equation (4) have finite values during the contact time T, they become 0 when the hammer and the object are parted from each other.

Therefore, by measuring the contact time T with reference to the waveform of the electric signals from the force detecting sensor or the acceleration detecting sensor, it is possible to determine the spring constant K of the object to be inspected 6 from the above equation (5).

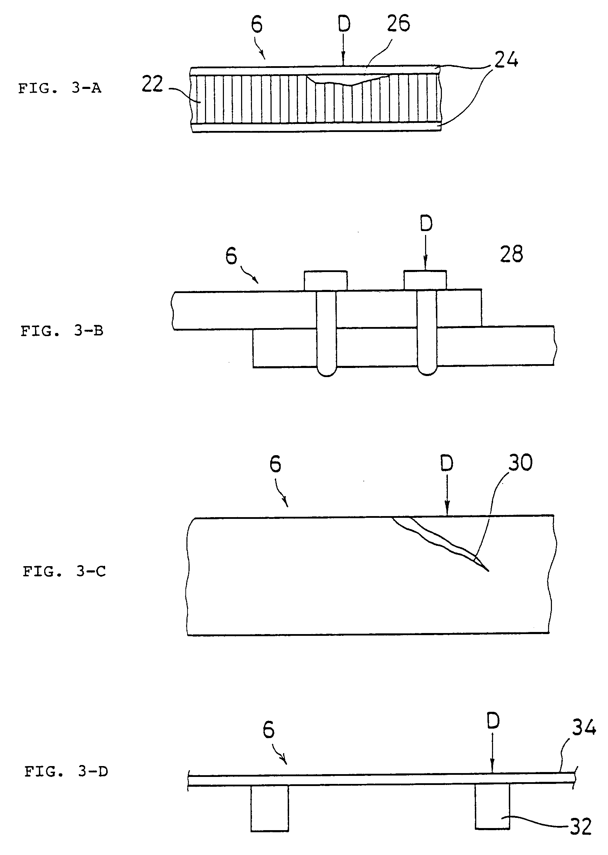

Now, descriptions will be entered into the operation of the impact-type structure inspection apparatus according to Fig. 1, in connection with various candidate objects, namely objects to be inspected. When the honeycomb plate or board shown in Fig. 3-A, which comprises a honeycomb core 22 and surface plates 24, is hit at the point shown by an arrow D, this object for inspection 6 shows a lower spring constant K at the peeled portion shown by 26 than at the other normal portions. In the bolt-fastened portion shown by 28 in Fig. 3-B, the spring constant will be small where a slack exists. In the case of the concrete-placed structure shown in Fig. 3-C, the spring constant is low in the vicinity of the surface crack shown by 30. Further, in the case of the structure shown in Fig. 3-D, which has a wall surface 34 supported by joists or like supports 32, the spring constant is high at the location of the joists or like supports 32. As stated above, where a structural change is present in the object 6, the contact time T shows a change in comparison to a normal portion in the object 6. Therefore, by comparing the detected length of the contact time T with the length of a reference time $T_{\emptyset}$, it is possible to display on a display device the result of a judgment made concerning whether or not a defect is present in structures as described above.

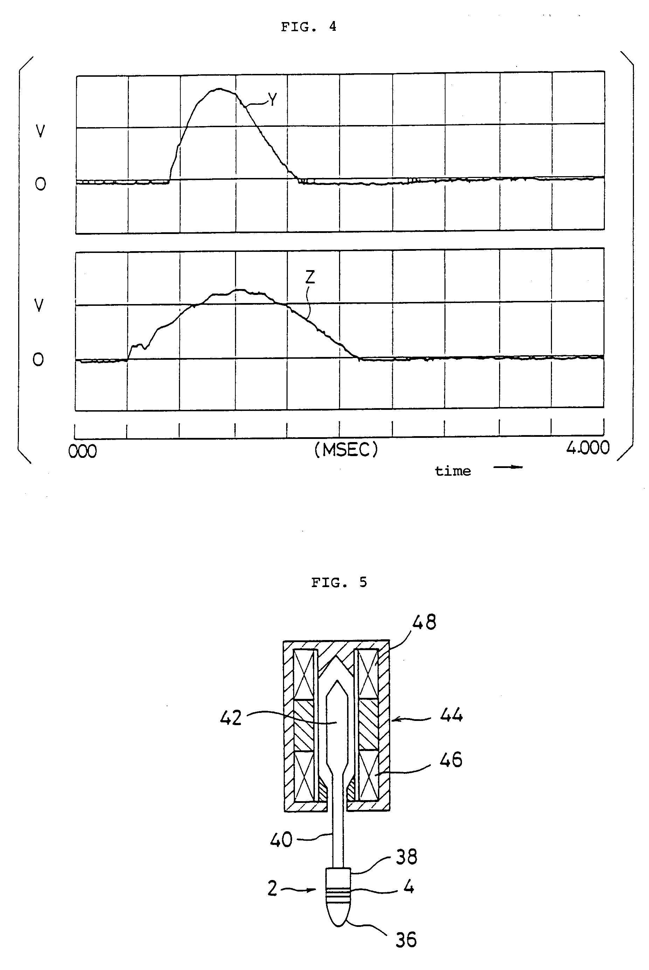

Using a honeycomb board having a paper core of a height of 12 mm and 0.8 mm thick aluminium plates on both surfaces and having a $\emptyset$ 45 mm peeled portion for the object to be inspected 6, this board was subjected to an impact force application by a hammer 2 weighing 140 g, when there were detected the pulse waveform of force F shown by the curve Y in Fig. 4 at the peeled portion in the board and the pulse waveform shown by the curve Z in Fig. 5 at a normal portion of the board. As can be seen, between the two curves Y and Z there is such a difference as nearly to be two times, and this difference is clearly shown by the apparatus shown in Fig. 1.

There has already been developed such inspection apparatus according to which a striking hammer which is hand-operated in the above described apparatus is now automatically operated: According to U. S. Patent No. 4,519,245 for example, a spring is mounted on a hammer provided with a piezoelectric device, and the hammer is repeatedly caused to hit against a material being tested as shot by an electromagnetic force and then return to its original position by a repelling force of the hammer against the material hit thereby and the force of the spring, whereby the waveform of output signals of the piezoelectrice device is displayed on an oscilloscope and the determination of an internal condition of the material is made by reading the waveform. Also, according to U. S. Patent No. 4,682,490, output signals from a sensor mounted on a hammer driven by similar driving means to that in the above U. S. Patent No. 4,519,245 are classified into three levels depending on the signal levels to display the internal condition of a structure.

In each of the above apparatus, however, the hammer is driven in a free motion condition to hit against an object being tested or inspected, so that the apparatus involve the problem that if the hammering position of the hammer relative to the object being tested or inspected is possibly changed, the result of a test or an inspection tends to fluctuate even if the internal condition of the object being tested is the same.

Disclosure of the Invention

The object of the present invention is to provide apparatus for impact-type inspection of structures by which a hammer is driven by a driving device to hit against a structure being inspected and the impact the hammer then undergoes is detected to inspect an internal condition of the structure accurately.

To attain the above object, the present invention provides apparatus for impact-type inspection of structures, which comprises: a hammer having a hammer head and a sensing means for sensing impact

EP 0 351 430 B1

force or deceleration, the hammer head being disposed at a leading end portion of the hammer; a hammer driving member which includes a hammer driving means for driving the hammer from a return position against an object to be inspected so as to apply a non-destructive impact force to the object to be inspected, and the hammer driving member including a return means for driving the hammer back to the return position; and means receiving the output of the sensing means for calculating a waveform characteristic of said signal, whereby said receiving means are designed for sequentially actuating the hammer driving means, and deactuating the hammer driving means when a contact detection signal is received from the sensing means, which is generated when the hammer contacts the object.

Structures of which an inspection can be made using the apparatus of the present invention include structures integrally assembled by bolts and/or rivets such as bridges and the like, honeycomb structural bodies, concreted structures or the like, structural matters comprising a concreted body formed with an outer decorative layer of cement mortar, building-type structures comprising wood frames externally provided with wall panels made of for example a gypsum board, and so forth.

Then, objective points or items for inspection by the apparatus of present invention, for the above exemplified structures, include any condition of fastening by bolts and/or rivets, any defects in honeycomb structures such as a floating detachment of a surface panel, any cracks in concreted bodies, floating detachment of cement mortar, the position of a wood frame member supporting wall panels, and so forth.

Brief Description of the Drawings

Fig. 1 is a schematic view, showing a known impact-type structure inspection apparatus utilizing a manually operated hammer;

Fig. 2 is a view, illustrating the principle of the determination made with use of the apparatus of Fig. 1;

Fig. 3-A is a view, showing the instance in which a honeycomb structure is inspected using the apparatus of Fig. 1;

Fig. 3-B is a view, showing the instance in which a bolt-fastened structure is inspected using the apparatus of Fig. 1;

Fig. 3-C is a view, showing the instance in which a concrete-placed structure is inspected using the apparatus of Fig. 1;

Fig. 3-D is a view, showing the instance in which an inspection using the apparatus of Fig. 1 is made of a structure in which a wall surface is formed on joists or like supports;

Fig. 4 shows waveform charts obtained as a result of the inspection illustrated in Fig. 3-A;

Fig. 5 shows a sectional view of a hammer driving part, according to a first embodiment; of the present invention

Fig. 6 shows a block diagram of a control circuit for the hammer driving part shown in Fig. 5;

Fig. 7 shows a block diagram of a judgment circuit in the control circuit shown in Fig. 6;

Fig. 8 shows a block diagram of a display circuit in the circuit shown in Fig. 7;

Fig. 9 is a side elevational view of a portable apparatus for impact-type structure inspection, incorporating the hammer driving part shown in Fig. 5;

Fig. 10 shows a timing chart, taken for an illustration of the operation in the case of the first embodiment of the invention,

Fig. 11 is a view, taken for an illustration of procedures for modulation of a waveform;

Fig. 12 is a sectional view of a hammer driving part according to a second embodiment of the present invention;

Fig. 13 is a sectional view of a hammer driving part according to a third embodiment of the invention;

Fig. 14 is a sectional view of a hammer driving part according to a fourth embodiment of the invention;

Best Mode for Carrying Out the Invention

For the sensor to be mounted on a hammer according to the present invention, useful are such as piezoelectric sensors, accelerometers and strain gauges. A piezoelectric sensor or a strain gauge is preferably mounted at a front end portion of the hammer, while an accelerometer is preferably attached at a rear end portion of the hammer, but the above is not limitative.

As later to be described in greater detail, where the automatic driving device constituting the driving part in the impact-type structure inspection apparatus according to the present invention is used for an inspection of a broad area as in the cases of inspection of a building, it is possible to parallel arrange a plurality of detecting devices in an integral assemblage and operate the inspection with the detecting devices simultaneously.

6

[Example 1]

Now, referring to Figs. 5 to 11, a detailed description will be given to a portable fully automatically controllable inspection apparatus according to a first embodiment of the present invention. Fig. 5 is a sectional view, showing the hammer driving part used in the present embodiment 1, in which the hammer 2 has a hammer head 36 having an almost conical configuration, a force detecting sensor 4 and a weight 38, which altogether are made a one body by for example bonding. Also, an actuation rod 40 is connected to the weight 38, and an upper end portion of the rod 40 is made a plunger 42 made of a mild steel and housed in a casing of the hammer driving part 44, which comprises a striking coil 46 for driving the hammer 2 towards the object for inspection through the plunger 42 and a return coil 48 for returning the hammer 2 away the object for inspection.

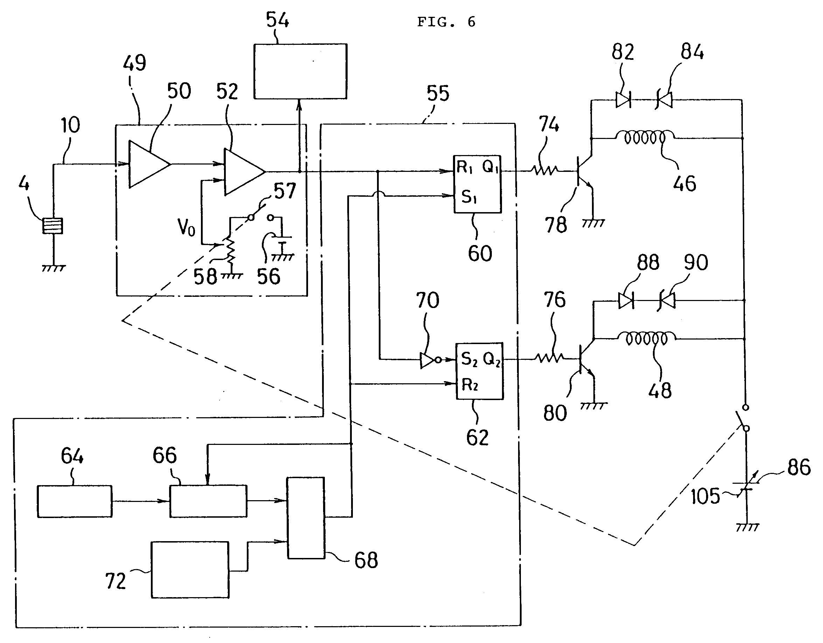

The force detecting sensor 4 comprises a piezoelectric element, detects contact of the hammer head 36 with the object to be inspected and sends a detection signal to a control part. In greater detail, when the hammer head 36 contacts the object that is not shown, a voltage corresponding to the reaction force of the object is generated at an electrode (not shown) of the force detecting sensor 4, this voltage being fed to the control part shown in Fig. 6 via a lead wire 10 (Fig. 6).

The above voltage generated in the force detecting sensor 4 is put into a comparator 52 through an amplifier 50 in an input circuit 49, subjected to a waveform modulation and then put into an abnormality. judgment circuit 54 and a hammer drive control circuit 55. Further, the comparator 52 is fed with a reference voltage $V_\emptyset$ by a variable resistance 58 powered from a power source 56 through a switch 57.

The hammer drive control circuit 55 comprises two flip-flops 60 and 62, an oscillator 64, a counter 66 and a comparator 68. The output side of the comparator 52 is connected to a reset terminal $R_1$ of the flip-flop 60 and also to a set terminal $S_2$ of the flip-flop 62 through a NOT circuit 70. Further, the oscillator 64 is connected to the input side of the counter 66, the output from which counter is put into the comparator 68 together with a reference value put out from a reference value setter 72. The output from the comparator 68 is fed as reset signal to the counter 66 and also to the set tereminal $S_1$ of the flip-flop 60 and the reset terminal $R_2$ of the flip-flop 62.

Output terminals $Q_1$ and $Q_2$ respectively of the flip-flops 60 and 62 are connected to the bases of transistors 74 and 76 respectively, through resistors 74 and 76 respectively. Emitters of the transistors 78 and 80 are grounded, and to the collectors of the transistors, the hammer striking coil 46 and a flywheel diode 82 are parallel connected. The flywheel diode 82 has its anode side connected to the collector of the transistor 78 and its cathode side connected to the cathode of a Zener diode 84. The anode of the Zener diode 84 is connected to an output variable power source 86 together with the hammer striking coil 46.

To the collector of the transistor 80, the return coil 48 and a flywheel diode 88 are parallel connected. The flywheel diode 88 has its anode connected to the collector of the transistor 80 and its cathode connected to the cathode of a Zener diode 90, of which the anode is connected to the power source 86 together with the return coil 48.

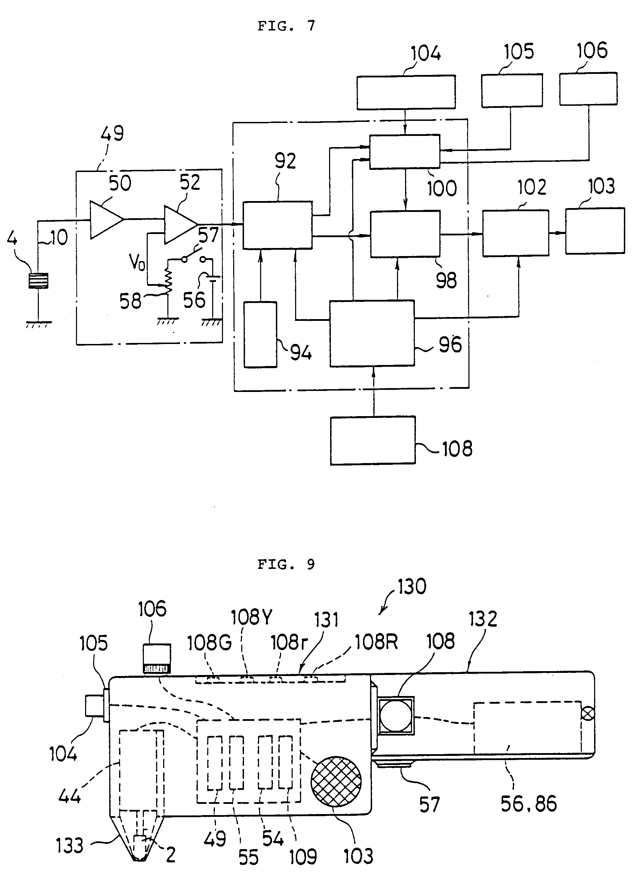

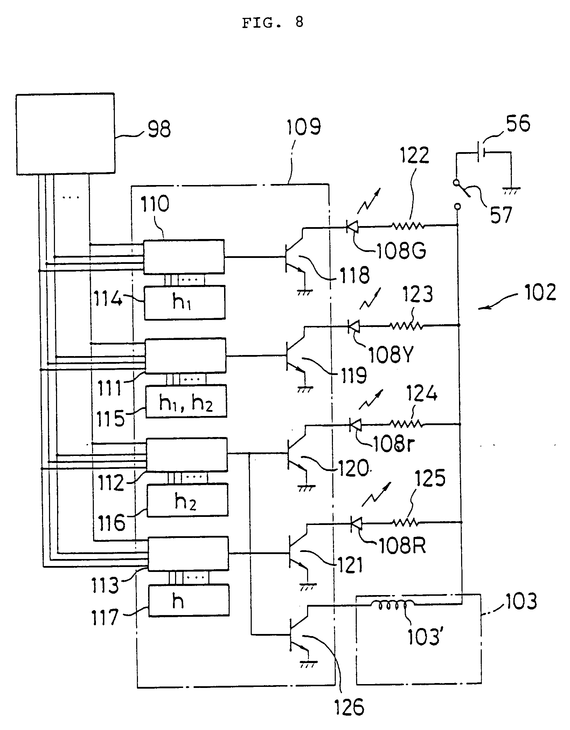

Fig. 7 illustrates an example of the above-mentioned abnormality judgment circuit 54, and this circuit comprises a counter 92, a controller 96, a comparator 98 and a memory 100. The counter 92 receives the output from the comparator 52, pulse signals from the oscillator 94 and control signals from the controller 96. The output from the counter 92 is put into the comparator 98 and the memory 100. The comparator 98 receives a setting direction from the controller 100, takes in the value memorized in the memory 100 as reference value and compares it with the output signals from the counter 92, and feeds the result of the comparison to a display device or part 102 and an abnormality warning buzzer 103 (details in this respect will later be described with reference to Figs. 7 and 8). In the memory 100, such as an average number to be set by operating an abnormality setting knob 104, an impact strength setting knob 105 and an average number setting knob 106 and a reference value (later to be described) put out from the counter 92 are written by the controller 96. Further, the controller 96 receives a writing direction from a reference value setting button 108 and controls the display device 102 to alter the contents of display corresponding to the size of the output signals from the comparator 98.

Now, a description will be given the details of the display device or part 102 and the abnormality warning buzzer 103 with reference to Fig.8. The display device 102 comprises light emitting diodes 108G, 108Y, 108r and 108R, and further comprises a switching circuit 109 for controlling each of the above light emitting diodes and the buzzer 103. In greater detail, corresponding to the above light emitting diodes, a plurality (four in the case of the illustated embodiment) of comparators 110, 111, 112 and 113 are connected parallel with output terminals of the above comparator 98. To the comparators 110 to 113, judgment value setters 114, 115, 116 and 117 are connected, respectively. The comparator 112 comprises a window compaator. In the judgment value setter 115, two judgment values $h_1$ and $h_2$ are set, while in the other judgement velue setters 114, 116 and 117, judgment values $h_1$ (for example 10), $h_2$ (for example 20) and $h_3$ (for example 50) are set, respectively.

The output side of each of the comparators 110 to 113 is connected to the base of each of switches 118, 119, 120 and 121 comprising transistors to be connected to the light emitting diodes 108G, 108Y, 108r and 108R by judgment signals issued from the comparator 98, and the comparators operate comparisons with the above judgment values $h_1$, $h_2$ and $h_3$ and put out singals for on-off operation of the switches.

In greater detail, the comparator 98 calculates the largeness (ratio) of the contact time T put out from the counter 92 to the reference value $T_\emptyset$ stored in the memory 100 (later to be described) according to the following equation:

$$h = 100 \times (T - T_\emptyset)/T_\emptyset \qquad (6)$$

and when $h < h_1$, the comparator 110 puts out "1" (high signal), while when $h_1 < h < h_2$ the comparator 111 puts out "1". Also, when $h > h_2$, the comparator puts out "1", and when $h > h_3$, the comparator 113 puts out "1".

The light emitting diodes 108G, 108Y, 108r and 108R have their respective cathodes connected to respecitve collectors of the transistors 118, 119, 120 and 121 and have their respective anodes connected to the power source 56 through resistances 122, 123, 124 and 125, respectively.

The light emitting diodes 108G to 108R in the present example can display different conditions in different colors. That is to say, the light emitting diode 108G displays a normal condition in green, the diode 108Y displays in yellow the condition in which the contact time is appreciably longer in comparison to a reference time length and in which a caution must be paid, and diodes 108r and 108R shows an abnormal condition in red.

A solenoid 103' for actuating the buzzer 103 is connected to the collector of a switch 126 comprising a transistor connected so as to receive at its base the output from the comparator 112, and it issues alarm or warning sound when the diode 108r emits light.

Fig. 9 shows a side elevational view of a portable impact-type structure inspection apparatus, which incorporates the hammer driving part 44, the input circuit 49 and driving circuit 55 therefor shown in Fig. 6, the abnormality judgment circuit 54 for displaying the result of the inspection (Fig. 7), the display device 102 and the buzzer 103 (Fig. 8).

The apparatus shown in Fig. 9 has a configuration facilitating the handling and the operation from the standpoint of the human engineering, and this impact-type inspection apparatus, generally shown at 130, comprises a main body 131 and a handle or grip 132, which are integrally fabricated. The main body 131 is provided with such as the impact strength setting knob 105, the abnormality display level setting knob 104, the average number setting knob 106, light emitting diodes 108G, 108Y, 108r and 108R, and the buzzer 103.

On the other hand, the handle 132 is provided with the reference value setting button 108 at a position facilitating the operation of this button by the thumb of an operator's hand gripping at the handle and the power source swtching button 57 at a position facilitating the operation of this button by the forefinger of the same operator's hand as above. Also, at two sides of the hammer 2, legs 133 are integrally provided with the main body 130, which has a triangular configuration tapered in the direction of from its base to its leading end. Further, in the impact-type inspection apparatus 130, such as power source batteries 56 and 86, the hammer driving part 44, the input circuit 49, the driving circuit 55, the abnormality judgment circuit 54 and a switching circuit 109 are housed.

The result of the inspection can be displayed in the above described manner or by any of such other means as letters, numerical figures or symbol marks, a difference in colors, a difference in the length of bars in a bar chart and so forth.

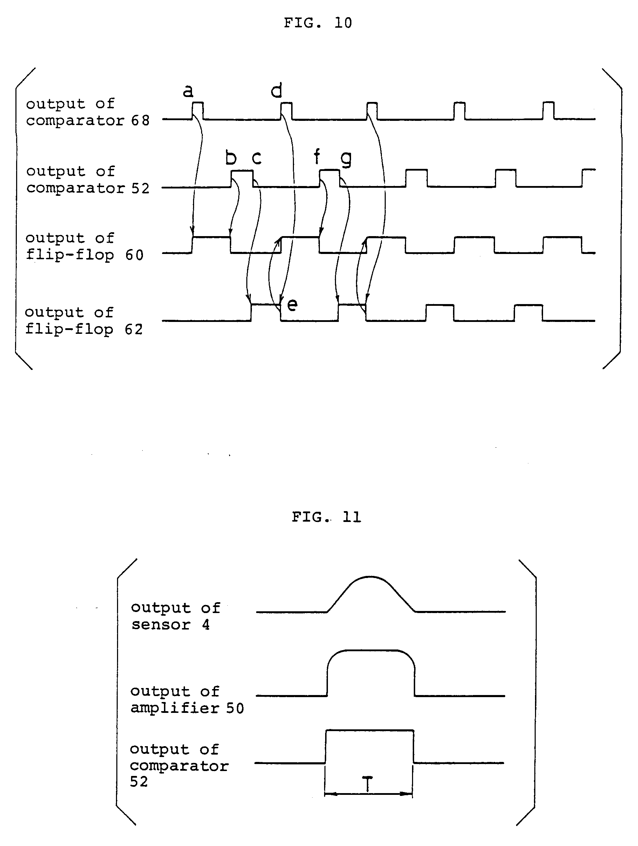

Now, with the reference transferred to the time charts shown in Figs. 10 and 11, the operation of the impact-type structure inspection apparatus structured as above according to the present example will be described. Hammer drive control:

Initially, the impact-type inspection apparatus 130 is gripped at the handle 132 by a hand and the legs 133 are pressed against an object to be inspected which is not shown. As the power source switch 57 is then pressed in, the apparatus 130 starts operation and the counter 66 counts the pulse signals generated by the oscillator 64 and feeds the calculated value to the comparator 68 (Fig. 6). The comparator 68 compares the calculated value from the counter 66 with a reference velue set by the reference value setter 72, and as soon as the calculated value reaches the reference value, puts out pulses as shown in Fig. 10. The output signals from the comparator 68 are fed to the set terminal $S_1$ of the flip-flop 60 as set signal and the reset terminal $R_2$ of the flip-flop 62 as reset signal, and also to the counter 66 as reset signal. When it receives a reset signal from the comparator 68, the counter 66 clears the calculated value and commence calculation of the output pulses from the oscillator 64 again from 1.

When its set terminal $S_1$ receives the output pulse from the comparator 68, responsive to the rise of that output pulse, the flip-flop 60 puts out "1" (high signal) from its output terminal $Q_1$ (Fig. 10), which signal "1" is fed to the base of the transistor 78 through the resistor 74 to actuate the transistor 78. Thus, electric current flows from the power source 86 to the striking coil 46, the collector and the emitter of the transistor 78, and as a result of this, the striking coil 46 generates magnetic force and drives the hammer 2 against the object to be inspected.

When the hammer head 36 collides against the object and impart an impact force thereto, the force detecting sensor 4 comprising a piezoelectric element is compressed by the force of inertia of the weight 38 and the actuation rod 40 and by the rection force of the object, and during the time between when the hammer head 36 first contacts the object and when it then leaves the object as it is rebounded due to the reaction force of the object, the force detecting sensor 4 puts out a contact detection signal corresponding to the compression force, as shown at top in Fig. 11, to the amplifier 50. The amplifier 50 amplifies the signal fed thereto and send an output signal as shown in the middle in Fig. 11 to the comparator 52, which compares the output from the amplifier 50 with the reference voltage $V_\emptyset$ and puts out a signal of a pulse length corresponding to the length of time of the contact T of the force detecting sensor 4 and the object.

Output signals from the comparator 52 are put into the abnormality judgment circuit 54 and, at the same time, to the reset terminal $R_1$ of the flip-flop 60 in the hammer drive control circuit 56 and the NOT circuit 70. Thus, at the rise b of the signal from the comparator 52, namely at the initiation of contact of the force detecting sensor 4 with the object, the flip-flop 60 is reset, and the output from its output terminal $Q_1$ becomes "0" (low signal), whereby the operation of the transistor 78 stops. As a result of this, the flow of electric current to the striking coil 46 stops, and the before generated magnetic force and the force of driving the hammer 2 disappear.

On the other hand, the flip-flop 62 receives at its set terminal $S_2$ the signals from the comparator 52 through the NOT circuit 70, so that the fall c (Fig. 10) of the signal from the comparator 52 functioning as set signal, flip-flop 62 puts out "1" from its output terminal $Q_2$ at the fall c or, in other words, as the hammer 2 leaves the object. As a result of this, the transistor 80 is actuated and electric current flows to the return coil 48, which generates magnetic force and returns the hammer 2 away the object.

As soon as the value calculated by the counter 66, which resumed the counting again from 1 as it received the signal from the comparator 68, reaches the reference value, the comparator 68 puts out pulse signals and feed them to the counter 66 as set signal and to the flip-flop 62 as reset signal. Thus, at the rise d (Fig. 10) of the output signal from the comparator 68, the flip-flop 62 is reset and the output of its output terminal $Q_2$ becomes "0" (shown at e in Fig. 10), whereby the operation of the transistor 80 stops and the magnetic force generated by the return coil 48 disappears. At the same time as this, the output signal from the comparator 68 is put into the set terminal $S_1$ of the flip-flop 60 and, in same manners as stated above, the flip-flop 60 puts out the "1" signal to the transistor 78 to actuate this transistor 78. As a result of this, electric current flows to the striking coil 46, and the hammer 2 is driven towards the object to be inspected.

When the hammer 2 collides against the object, the force detecting sensor 4 issues the contact detection signal, and at the rise f (Fig. 10) of the signal from the comparator 52, the output of the flip-flop 60 becomes "0", whereby the operation of the transistor 78 stops and the magnetic force generated by the striking coil 46 disappears. As the hammer head 36 then leaves the object, the output of the comparator 52 undergoes a rise as shown by g (Fig. 10) and the output of the flip-flop 62 becomes "1", whereby the transistor 80 starts operation and electric current flows to the return coil 48 to cause the hammer 2 to undergo the return motion. The above described cycle of operations is repeated.

As described above, in to the apparatus including the hammer drive control of the present embodiment, at the same time as the hammer 2 commences contact with the object, the driving of the hammer 2 is interrupted, so that it can take place that the hammer 2 is repelled or rebounded by the repelling force of the object, and it is therefore possible to correspond the length of time of contact of the hammer 2 with the object for the inspection to the internal structure of the object. Also, the return motion of the hammer 2 can take place at the same time as the hammer 2 leaves the object, it is possible to completely correspond the length of time of the contact together of the hammer 2 and the object to the internal structure of the object.

Now, a description will be given the operation of the abnormality judgment circuit 54.

Initially, the legs 133 of the impact-type inspection apparatus 130 are placed at a reference position, for example a normal portion, of the object to be inspected, and then the hammer 2 is driven as above described. As a result of this, the force detecting sensor 4 detects the contact together of the hammer head 36 and the object and sends a detection signal to the comparator 52 through the amplifier 50. The comparator 52 sends signals of a pulse length corresponding to the length of the time of contact together of the hammer head 36 and the object to the counter 92 of the abnormality judgment circuit 54 (Fig. 7).

At or by the rise of the signal put out from the comparator 52, the counter 92 starts counting the pulses generated by the oscillator 94 and stops the counting at or by the fall of the signal from the comparator 52, undergoes clearing and puts out the counted value. When the reference value setting button 108 provided in the handle 132 is pressed, the controller 96 writes the counted value put out from the counter 92 in the memory 100 and also puts the counted value into the comparator 98 as reference value $T_\emptyset$.

The comparator 98 takes in the calculated value (the contact time T) put out by the counter 92, carries out an operation according to the aforementioned equation (6) and puts out the result of the calculation to the display device 102. In the display device 102, when the value above calculated by the comparator 98 is smaller than the predetermined value or 10 as before described with reference to Fig. 8, the light emitting diode 108G is energized in green, showing that the condition is normal at the inspected point of the object. Then, when the hammer 2 is driven to impart an impact force to an abnormal portion of the object, for example a peeled point in a honeycomb board or tiled structure and when the time of contact T of the hammer 2 with the object, the honeycomb board or the tiled structure, is so long that the result of the calculation by the comparator 98 exceeds 10, the light emitting diode 108Y is lit in yellow, showing an abnormal condition in the object. Further, when the result of the calculation is 20 or exceeds this value, the light emitting diode 108r is lit in red and, at the same time, the buzzer 103 issues sound alarm, and if it is 50 or exceeds this, the light emitting diode 108R is also lit in red.

As described above, according to the abnormality judgment method of the present example, it is possible to judge whether or not an abnormal portion exists in the object with reference to or based on the time of contact together of the hammer 2 and the object, and the intended inspection of an abnormality in the object can be made extremely easily and yet accurately in comparison to conventional comparable methods. Also, at the point or portion of an object for inspection at which it includes a core member or the like inside, the object has a higher spring constant and the time of contact of the hammer 2 with the object becomes shorter at such point or portion than at other points or portions of the object, and by making use of this fact, it is possible to inspect whether or not the object includes an internal core or the like.

Further, the levels of the abnormality judgment, namely the values $h_1$, $h_2$ and $h_3$, can be appropriately adjusted at will by turning the abnormality display level setting knob 104. For example, by turning the knob 104, setting may be made as $h_1 = 10$, $h_2 = 20$ and $h_3 = 50$. Then, the controller 96 reads those set values, writes them in the judgment value setter 114, 115, 116 and 117, and controls the display device 102 to operate corresponding displays.

The time of contact T of the hammer 2 with the object being inspected depends on the spring constant (rigidity) of the object as shown by the aforementioned equation (5) and as the spring contant is larger, the contact time T is shorter. Where the spring constant of the object is very large, the contact time T is very short, and the change $\Delta T$ of the contact time T is so small that it is then difficult to detect an abnormal portion. Therefore, in the cases of objects having a large spring constant, preferably an impact force is applied by a hammer 2 of a large mass to increase the $\Delta T$ so much that detection of an abnormality can be facilitated. Also, where the object to be inspected has only a small thickness, the impact force to be imparted to the object may be small, but where the object has a large thickness, in which it is anticipated that an abnormality may exist in a deep point in the object, the impact force is likely to undergo dispersion and/or attenuation, so that it is necessary to apply an intense impact force.

Accordingly, the impact-type inspection apparatus of the present example is provided with the impact strength setting knob 103 so that by adjustably turning this know 103, the intensity of the impact force can be adjusted. By truning the knob 103, the output of the power source 86 changes and the intensity of the magnetic force generated by the striking coil 46 and the return coil 48 can change, whereby the velocity and the force of driving of the hammer 2 can be changed and the intensity of the impact force to be imparted to the object can be changed.

Further, the average number setting knob 106 is for directing the average number at which the counter 92 averages and puts out the plurality of detection signals of the force detecting sensor 4 and also for altering the set value in or of the reference value setter 72 shown in Fig. 6 and altering the distance in which the hammer 2 is driven.

[Example 2]

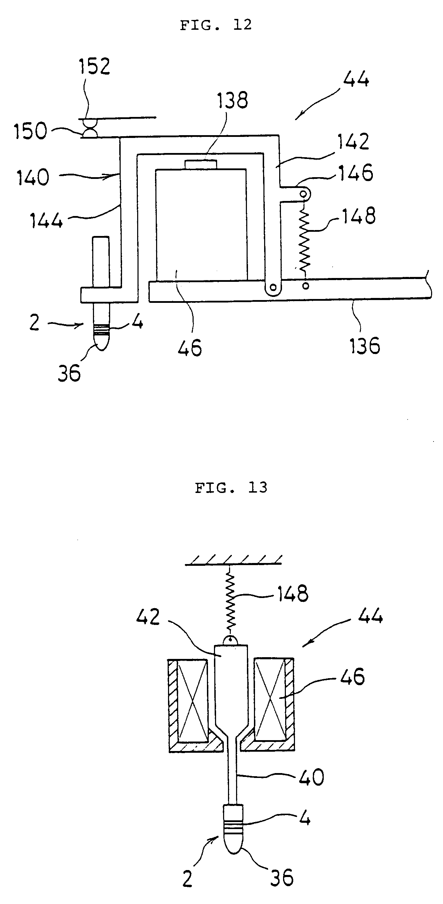

The hammer driving part 44 according to a second embodiment illustrated in Fig. 12 includes a base 136, at an end portion of which an electromagnet comprising an iron core 138 and a coil 46 is fixed. The electromagnet is surrounded by a ]-shaped bracket 140 made of a soft iron, of which one leg 142 is pivotally supported by the base 136, while the other leg 144 is disposed in front of an end of the base 136 with space from this end and has the hammer 2 fixed at its lower end portion. The pivotably supported leg 142 of the bracket 140 is formed with an engaging protuberance 146, and between this protuberance 146 and the base 136, a hammer returning spring 148 is mounted. Also, the bracket 140 has a contact 150 fixed at an upper portion thereof. When the bracket 140 returns to its prescribed return position, the contact 150 undergoes a contact with a fixed contact 152 provided in the impact-type inspection apparatus 130.

In operation of the hammer driving part 44 of Fig. 12 structured as above, when the power source is turned on by the power source switching button 57, electric current flows from the battery 86 to the coil 46 through the electric contacts 152 and 150 and magnetic flux is generated from the iron core 138 to attract the bracket 140, so that the hammer 2 fixed to the bracket 140 is driven towards below to impart an impact force to the object (not shown). When the hammer head 36 of the hammer 2 undergoes a contact with the object, a contact detection signal is issued from the force detecting sensor 4, and upon this, the driving circuit 55 shuts off the electric current flowing to the coil 46. As a result of this, the magnetic force generated at the electromagnet disappers and the bracket 140 is rotated in the clockwise direction by the force of the hammer returning spring 148, whereby the hammer 2 leaves the object and the bracket 140 is returned to its prescribed return position. When the bracket 140 reaches its return position, the contact 150 undergoes contact with the fixed contact 152, and electric current again flows to the coil 46 and the hammer 2 is again driven. Then, the above cycle of operation is repeated.

In the present example, too, the driving of the hammer towards the object is brought to halt by the detection signal from the force detecting sensor 4. Therefore, the hammer 2 can receive a reaction force correspnding to the spring constant of the object and can be returned to its return position by the hammer returning spring 148. However, the spring constant of the hammer returning spring 148 is constant, so that it is possible to let the time of contact T of the hammer 2 with the object correspond to the internal structure of the object, without the contact time T depending on the spring constant of the object. Also, now that the return motion of the hammer is effected by the hammer returning spring 148, it is possible to simplify for example the control circuit.

[Example 3]

The hammer driving part 44 according to a third embodiment shown in Fig. 13 avoids the need of using the hammer returning coil 48 used in the hammer driving part 44 shown in Fig. 6, and in place thereof, a hammer returning spring 148 is provided to the plunger 42. In the hammer driving part 44 of the present example, electric current is caused to flow to the the transistor 78 by the output signal from the comparator 68 in Fig. 6, whereby the striking coil 46 drives the hammer 2 toward the object. When the hammer 2 collides against the object, as before stated the flow of electric current to the striking coil 46 stops, and the hammer 2 is returned to its return position by the spring 148.

[Example 4]

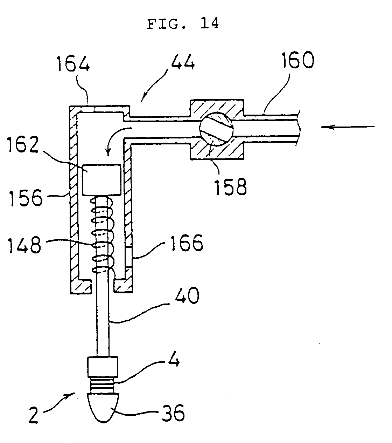

Fig. 14 shows the hammer driving part 44 according to a fourth embodiment of the invention in which the hammer 2 is driven using compressed air. As shown, to an upper portion of a cylinder 156 in which the actuation rod 40 is received, one end of a pipe provided with a rotary valve 158 is connected. The pipe 160 is connected to a high pressure tank (not shown) and guides compressed air into the cylinder 156.

At its upper end, the actuation rod 40 is provided with a piston 162, and between this piston 162 and the bottom wall of the cylinder 156, the hammer returning spring 148 is interposed. The top wall and the bottom wall of the cylinder 156 are formed with an exhaust port 164 and an exhaust port 166, respectively.

In the case of the hammer driving part 44 structured as above, the rotary valve 158 is opened by the output signal from the comparator 68 shown in Fig. 6, when compressed air enters the cylinder 156 to lower the piston 162 and drive the hammer 2. Then, the valve 158 is closed by the contact detection signal issued by the force detecting sensor 4, whereby the hammer 2 is returned to its return position by the force of the hammer returning spring 146.

Further, although in the above, descriptions of examples are made with reference to the instance in which the force detecting sensor 4 comprises a piezoelectric element, the force detecting sensor 4 may alternatively comprise any of elements or devices which can detect strain such as piezoresistance elements and strain gauges.

**Claims**

1. Apparatus for impact-type inspection of structures, comprising :
a hammer (2) having a hammer head (36) and a sensing means (4) for sensing impact force or deceleration, said hammer head (36) being disposed at a leading end portion of said hammer; a hammer driving member (44) which includes a hammer driving means (46, 156) for driving said hammer from a return position against an object to be inspected so as to apply an non-destructive impact force to the object to be inspected, and said hammer driving member including a return means (48, 148) for driving said hammer back to said return position; and means (49, 55) receiving the output of said sensing means (4) for calculating a waveform characterisitc of said signal, characterized by said receiving means (49, 55) sequentially actuating said hammer driving means (46, 156), and deactuating said hammer driving means when a contact detection signal is received from said sensing means (4) which is generated when the hammer contacts the object.

2. Apparatus as claimed in claim 1, wherein :
said hammer includes a plunger (42) made of mild steel, said plunger being disposed on a side of said hammer (2) opposite that of said hammer head (36);
said hammer driving means comprises a strike coil (46) for driving said plunger (42) toward the object to be inspected;
said return means comprises a return coil (48) for driving said plunger (42) in a return motion toward said return position; and
said means (49, 55) receiving the output of said sensing means (4) comprises a hammer drive control means (55) for actuating said strike coil (46), for deactuating said strike coil (46) when said means receiving the output of said sensing means receives said contact detection signal from said sensing means (4), and for actuating said return coil to drive said plunger to said return position upon cessation of said output signal from said sensing means; and an abnormality judgment means (54) for calculating a waveform characteristic of said output signal received from said sensing means and for comparing a calculated waveform characteristic with a reference value; and a display means (102) for displaying a result of the comparison by said abnormality judgment means.

3. Apparatus as claimed in claim 2, wherein said hammer drive control means (55) comprises :
an oscillation circuit 64, 66, 68, 72 which periodically outputs signals for driving said hammer;
a strike flip-flop circuit (60) which activates said strike coil (46) when said strike flip-flop circuit (60) receives a signal from said oscillation circuit, and which deactivates said strike coil when said strike flip-flop circuit receives said contact detection signal from said sensing means (4); and a return flip-flop circuit (62) which activates said return coil (48) upon termination of said output signal from said sensing means (4) and which deactivates said return coil (48) upon receiving a signal from said oscillation circuit 64, 66, 68, 72.

4. Apparatus as claimed in claim 2, wherein said abnormality judgment means comprises :
a circuit (92) for calculating a waveform characteristic which is a time width of the output signal from said sensing means;
a plurality of comparison circuits (110 113);
and a display circuit for each comparison circuit,
for displaying a result of each comparison; said comparison circuits being preset with respective different comparison reference values and each said comparison circuit is adapted to : receive a waveform characteristic signal from an input circuit (49), compare the received signal with the respective said comparison reference value, and when said waveform characteristic falls whithin a predetermined of the respective said comparison reference value, send a predetermined signal said display circuit.

5. Apparatus as claimed in claim 1, wherein :
said hammer head is provided on a side of a free end of a rotatably supported bracket (140) comprising a magnetic body;
said hammer driving means for driving said hammer toward the object to be inspected comprises a strike coil (46) having an iron core (138);
said return means comprises a return spring (148) secured at one end to said bracket; and
said means (49, 55) receiving the output of said sensing means is adapted to actuate said strike coil

EP 0 351 430 B1

and, when said means receiving the output of said sensing means (4) receives the contact detection signal from said sensing means, said means receiving the output of said sensing means ceases actuation of said strike coil (46).

6. Apparatus as claimed in claim 1, wherein :
said hammer includes a plunger (42) made of mild steel, said plunger being disposed at a side of said hammer (2) opposite said hammer head (36);
said hammer driving means comprises a strike coil (46) for driving said plunger toward the object to be inspected;
said return means comprises a return spring (148) secured at one end thereof to said hammer; and
said means (49, 55) receiving the output of said sensing means (4) is adapted to actuate said strike coil and, when said means receiving the output of said sensing means receives the contact detection signal from said sensing means (4) said means receiving the output of said sensing means ceases actuation of said strike coil (46).

7. Apparatus as claimed in claim 1, wherein :
said hammer has a piston (162) disposed at a side of said hammer opposite said hammer head (36);
said hammer driving means comprises a cylinder (156) for receiving said piston, and a valve (158) for controlling compressed air for actuating said cylinder;
said return means comprises a return spring (148) having one end thereof secured to said hammer; and said means (49, 55) receiving the output of said sensing means (4) is adapted to open said valve (158) to supply said compressed air to said cylinder to apply pressure from said compressed air to said cylinder so as to drive said hammer toward the object to be inspected, and when said means (49, 55) receiving the output of said sensing means receives the contact detection signal from said sensing means, said means receiving the output of said sensing means causes said valve (158) to close.

8. Apparatus as claimed in claim 1, wherein said hammer driving member (44) has two legs (133) holding said hammer therebetween and having respective leading end portions converging toward each other, and said hammer head (36) is arranged such that a point at which said hammer head strikes the object to be inspected lies on a line connecting the leading ends of said two legs together.

**Patentansprüche**

1. Gerät für eine Schlagtyp-Inspektion von Konstruktionen, mit
einem Hammer (2) mit einem Hammerkopf (36) und einer Sensoreinrichtung (4) zum Fühlen der Aufschlagkraft oder Verzögerung, wobei der Hammerkopf (36) an einem Führungsendabschnitt des Hammers angeordnet ist, mit einem Hammer-Treiberglied (44), welches eine Hammertreibereinrichtung (46, 156) enthält, um den Hammer aus einer Rückkehrstellung zu einem zu inspizierenden Gegenstand oder Objekt hin anzutreiben, um dadurch eine nicht destruktive Aufschlagkraft auf den zu inspizierenden Gegenstand oder Objekt aufzubringen, wobei das Hammerantriebsglied eine Rückführeinrichtung (48, 148) enthält, um den Hammer zurück in die Rückführposition anzutreiben, und mit einer Einrichtung (49, 55), welche die Ausgangsgröße der Sensoreinrichtung (4) empfängt, um eine Wellenform-Eigenschaft des Signals zu berechnen,
**gekennzeichnet** durch eine Empfangseinrichtung (49, 55), die aufeinanderfolgend die Hammerantriebseinrichtung (46, 156) betätigt und die Hammerantriebseinrichtung außer Betrieb setzt, wenn ein Berührungs-Detektionssignal von der Sensoreinrichtung (4) empfangen wird, das dann erzeugt wird, wenn der Hammer das Objekt oder den Gegenstand berührt.

2. Gerät nach Anspruch 1, bei dem der Hammer einen aus weichem Stahl hergestellten Kolben (42) enthält, wobei der Kolben auf einer Seite des Hammers (2) gegenüber derjenigen des Hammerkopfes (36) angeordnet ist, bei dem ferner die Hammerantriebseinrichtung eine Schlagspule oder Wicklung (46) aufweist, um den Kolben (42) zu dem zu inspizierenden Gegenstand oder Objekt hin anzutreiben, bei dem ferner die Rückführeinrichtung eine Rückführspule oder Wicklung (48) aufweist, um den Kolben (42) in eine rückwärts verlaufende Bewegung anzutreiben und zwar zu der Rückführstellung hin, und bei dem die die Ausgangsgröße der Sensoreinrichtung (4) empfangende Einrichtung (49, 55) eine Hammerantriebs-Steuereinrichtung (55) enthält, um die Schlagspule oder Wicklung (46) zu betätigen, und um die Schlagspule oder Wicklung (46) außer Betrieb zu setzen, wenn die die Ausgangsgröße der Sensoreinrichtung empfangende Einrichtung das Berührungs-Detektionssignal von der Sensoreinrich-

13

EP 0 351 430 B1

tung (4) empfängt, und um die Rückführspule oder Wicklung zu betätigen, um den Kolben in die Rückführposition nach dem Ende des Ausgangssignals von der Sensoreinrichtung anzutreiben, und bei dem eine Abnormalitäts-Beurteilungseinrichtung (54) vorgesehen ist, um eine Wellenform-Eigenschaft des von der Sensoreinrichtung empfangenen Ausgangssignals zu berechnen und um eine berechnete Wellenform -Eigenschaft mit einem Bezugswert zu vergleichen, und bei dem eine Anzeigeeinrichtung (102) vorhanden ist, um ein Ergebnis des Vergleichs durch die Abnormalitäts-Beurteilungseinrichtung anzuzeigen.

3. Gerät nach Anspruch 2, bei dem die Hammerantriebs-Steuereinrichtung (55) folgendes enthält:
eine Oszillator-Schaltung (64, 66, 68, 72), die periodisch Signale zum Antreiben des Hammers ausgibt, eine Schlag-Flip-Flop-Schaltung (60), welche die Schlagspule oder Wicklung (46) aktiviert, wenn die Schlag-Flipp-Flopp-Schaltung (60) ein Signal von der Oszillator-Schaltung empfängt, und die die Schlagwicklung oder Spule außer Betrieb setzt, wenn die Schlag-Flip-Flop-Schaltung das genannte Berührungs-Detektionssignal von der Sensoreinrichtung (4) empfängt, und eine Rückführ-Flip-Flop-Schaltung (62), welche die Rückführwicklung oder Spule (48) nach Beendigung des Ausgangssignals aus der Sensoreinrichtung (4) aktiviert und welche die Rückführspule (48) nach Empfang eines Signals von der Oszillator-Schaltung (64, 66, 68, 72) entregt.

4. Gerät nach Anspruch 2, bei dem die Abnormalitäts-Beurteilungseinrichtung folgendes enthält:
eine Schaltung (92) zum Berechnen einer Wellenformeigenschaft, die aus einer Zeitbreite oder Weite des Ausgangssignals von der Sensoreinrichtung besteht, eine Vielzahl von Vergleichsschaltungen (110, 113), und eine Anzeigeschaltung für jede Vergleichsschaltung, um ein Ergebnis jedes Vergleichs darzustellen, wobei die genannten Vergleichsschaltungen hinsichtlich unterschiedlicher Vergleichs-Bezugswerte voreingestellt sind und wobei jede Vergleichsschaltung dafür ausgebildet ist, um:
ein Wellenform-Eigenschaftssignal von einer Eingangsschaltung (49) zu empfangen, das empfangene Signal mit dem jeweiligen genannten Vergleichsbezugswert zu vergleichen und wenn die Wellenformeigenschaft oder Charakteristik innerhalb eines vorbestimmten Wertes des jeweiligen Vergleichsbezugswertes fällt, ein vorbestimmtes Signal zu der Anzeigeschaltung zu senden.

5. Gerät nach Anspruch 1, bei dem der Hammerkopf an einer Seite eines freien Endes eines drehbar gehalterten Tragarmes (140) vorgesehen ist, der einen magnetischen Körper aufweist,
bei dem ferner die Hammerantriebseinrichtung zum Antreiben des Hammers zu dem zu inspizierenden Gegenstand ober Objekt hin eine Schlagspule oder Wicklung (46) mit einem Eisenkern (138) aufweist, die Rückführeinrichtung eine Rückführfeder (148) aufweist, die an einem Ende des Tragarmes befestigt ist, und die das Ausgangssignal der Sensoreinrichtung empfangende Einrichtung (49, 55) dafür ausgebildet ist, die Schalgspule oder Wicklung zu betätigen oder zu erregen und, wenn die das Ausgangssignal der Sensoreinrichtung (4) empfangende Einrichtung das Berührungs-Detektionssignal von der Sensoreinrichtung empfängt, die Betätigung oder Erregung der Schlagspule oder Wicklung (46) beendet.

6. Gerät nach Anspruch 1, bei dem der Hammer einen Kolben (42) aus einem weichen Stahl enthält, wobei der Kolben auf einer Seite des Hammers (2) gegenüber dem Hammerkopf (36) angeordnet ist, bei dem ferner die Hammerantriebseinrichtung eine Schlagspule oder Wicklung (46) aufweist, um den Kolben zu dem zu inspizierenden Objekt oder Gegenstand hin anzutreiben, und bei dem die Rückführeinrichtung eine Rückführfeder (148) aufweist, die mit ihrem einen Ende an dem Hammer befestigt ist, und bei dem die das Ausgangssignal von der Sensoreinrichtung (4) empfangende Einrichtung (49, 55) dafür ausgebildet ist die Schlagspule oder Wicklung zu betätigen oder zu erregen und, wenn die das Ausgangssignal von der Sensoreinrichtung empfangende Einrichtung das Berührungs-Detektionssignal von der Sensoreinrichtung (4) empfängt, die Betätigung der Schlagspule oder Wicklung (46) beendet.

7. Gerät nach Anspruch 1, bei dem der Hammer einen Kolben (162) aufweist, der auf einer Seite des Hammers gegenüber dem Hammerkopf (36) angeordnet ist, bei dem ferner die Hammerantriebseinrichtung einen Zylinder (156) aufweist, um den Kolben aufzunehmen, und ein Ventil (158) zur Steuerung von Druckluft zur Betätigung des Zylinders,
bei dem ferner die Rückführeinrichtung eine Rückführfeder (148) aufweist, deren eines Ende an dem Hammer befestigt ist, und bei dem die das Ausgangssignal der Sensoreinrichtung (4) empfangende Einrichtung (49, 55) dafür ausgebildet ist, um das Ventil (158) zu öffnen, um Druckluft dem Zylinder

14

zuzuführen, um Druck aus der Druckluft auf den Zylinder aufzubringen, um dadurch den Hammer zu dem zu inspizierenden Gegenstand oder Objekt hin anzutreiben, und bei dem dann, wenn die das Ausgangssignal der Sensoreinrichtung empfangende Einrichtung (49, 55) das Berührungsdetektionssignal von der Sensoreinrichtung empfängt, diese das Ausgangssignal von der Sensoreinrichtung empfangende Einrichtung bewirkt, daß das Ventil (158) schließt.

8. Gerät nach Anspruch 1, bei dem die Hammerantriebseinrichtung (44) zwei Beine (133) aufweist, die zwischen sich den Hammer halten und die jeweilige Führungsendabschnitte aufweisen, die zueinander hin konvergieren und wobei der Hammerkopf (36) derart angeordnet ist, daß ein Punkt, an welchem der Hammerkopf auf das zu inspizierende Objekt oder Gegenstand aufschlägt, auf einer Linie liegt, welche die Führungsenden der zwei Beine miteinander verbindet.

## Revendications

1. Appareil pour l'inspection du type à impact de structures, comprenant :
un marteau (2) comportant une tête de marteau (36) et des moyens de détection (4) pour détecter la force d' impact ou la décélération, ladite tête de marteau (36) étant placée à une partie d'extrémité avant du dit marteau ;
un dispositif d'entraînement de marteau (44) qui comporte des moyens d'entraînement de marteau (46,156) pour entraîner leditmarteau, à partir d'une position de retour, contre un objet à inspecter, de façon à appliquer une force d'impact non destructive à l'objet à inspecter, ledit dispositif d'entraînement de marteau comportant des moyens de rappel (48,148) pour ramener le dit marteau à ladite position de retour ; et
des moyens (49,55) de réception de la sortie des dits moyens de détection (4) pour calculer une caractéristique de forme d'onde dudit signal ;
caractérisé en ce que lesdits moyens de réception (49,55) activent et désactivent séquentiellement lesdits moyens d'entraînement de marteau (46,156) lorsqu'un signal de détection de contact est fourni par lesdits moyens de détection (4), ce signal étant engendré lorsque le marteau est en contact avec l'objet.

2. Appareil suivant la revendication 1, dans lequel :
ledit marteau comprend un plongeur (42) en acier doux, ledit plongeur étant situé sur un côté dudit marteau (2) opposé à celui de ladite tête de marteau (36);
lesdits moyens d'entraînement de marteau comprennent une bobine de frappe (46) pour entraîner ledit plongeur (42) vers l'objet à inspecter ;
lesdits moyens de rappel comprennent une bobine de retour (48) pour entraîner ledit plongeur (42) dans un mouvement de retour vers ladite position de retour ; et
lesdits moyens (49,55) de réception de la sortie desdits moyens de détection (4) comprennent des moyens de commande d'entraînement de marteau (55) pour exciter ladite bobine de frappe (46), désexciter ladite bobine de frappe (46) lorsque lesdits moyens de réception de la sortie desdits moyens de détection reçoivent ledit signal de détection de contact fourni par lesdits moyens de détection (4),et exciter ladite bobine de retour afin d'entraîner ledit plongeur vers ladite position de retour à la fin dudit signal de sortie desdits moyens de détection ; et des moyens de jugement d'anomalie (54) pour calculer une caractéristique de forme d'onde dudit signal de sortie fourni par lesdits moyens de détection et pour comparer une caractéristique de forme d'onde calculée à une valeur de référence ; et des moyens d'affichage (102) pour afficher un résultat de la comparaison effectuée par lesdits moyens de jugement d'anomalie.

3. Appareil suivant la revendication 2, dans lequel lesdits moyens de commande d'entraînement de marteau (55) comprennent :
un circuit oscillant (64,66,68,72) qui émet périodiquement des signaux pour entraîner ledit marteau ;
un circuit bistable de frappe (60) qui excite ladite bobine de frappe (46) lorsque ledit circuit bistable de frappe (60) reçoit un signal dudit circuit oscillant et qui désexcite ladite bobine de frappe lorsque le dit circuit bistable de frappe reçoit ledit signal de détection de contact fourni par lesdits moyens de détection (4) ; et
un circuit bistable de retour (62) qui excite ladite bobine de retour (48) à la fin dudit signal de sortie desdits moyens de détection (4) et qui désexcite la dite bobine de retour (48) à la réception d'un signal fourni par ledit circuit oscillant (64,66,68,72).

4. Appareil suivant la revendication 2, dans lequel lesdits moyens de jugement d'anomalie comprennent:

un circuit (92) pour calculer une caractéristique de forme d'onde qui est une durée ou largeur de temps du signal de sortie desdits moyens de détection ;

une pluralité de circuits de comparaison (110-113);

et un circuit d'affichage pour chaque circuit de comparaison, afin d'afficher un résultat de chaque comparaison ;

lesdits circuits de comparaison étant préréglés avec des valeurs de référence de comparaison différentes respectives et chaquedit circuit de comparaison étant prévu pour recevoir un signal caractéristique de forme d'onde venant d'un circuit d'entrée (49), comparer le signal reçu à la valeur de référence de comparaison respective et, lorsque ladite caractéristique de forme d'onde tombe à l'intérieur d'une valeur prédéterminée de la dite valeur de référence de comparaison respective, envoyer un signal prédéterminé audit circuit d'affichage.

5. Appareil suivant la revendication 1, dans lequel :

ladite tête de marteau est prévue sur un côté d'une extrémité libre d'un support monté de façon pivotante (140),comportant un corps magnétique ;

lesdits moyens d'entraînement de marteau, pour entraîner ledit marteau vers l'objet à inspecter, comprennent une bobine de frappe (46) à noyau en fer (138) ;

lesdits moyens de rappel comprennent un ressort de rappel (148) fixé, à une extrémité, audit support ; et

lesdits moyens (49,55) de réception de la sortie desdits moyens de détection sont prévus pour exciter ladite bobine de frappe et, lorsque lesdits moyens de réception de la sortie desdits moyens de détection (4) reçoivent le signal de détection de contact fourni par lesdits moyens de détection, lesdits moyens de réception de la sortie desdits moyens de détection cessent d'exciter ladite bobine de frappe (46).

6. Appareil suivant la revendication 1, dans lequel :

ledit marteau comprend un plongeur (42) en acier doux, ledit plongeur étant disposé d'un côté dudit marteau (2) à l'opposé de la tête de marteau (36) ;

lesdits moyens d'entraînement de marteau comprennent une bobine de frappe (46) pour entraîner ledit plongeur vers l'objet à inspecter ;

lesdits moyens de rappel comprennent un ressort de rappel (148) attaché ,à une de ses extrémités, audit marteau ; et

lesdits moyens (49,55) de réception de la sortie desdits moyens de détection (4) sont prévus pour exciter ladite bobine de frappe et, lorsque lesdits moyens de réception de la sortie desdits moyens de détection reçoivent le signal de détection de contact fourni par lesdits moyens de détection (4), lesdits moyens de réception de la sortie desdits moyens de détection cessent d'exciter ladite bobine de frappe (46).

7. Appareil suivant la revendication 1, dans lequel :

ledit marteau comprend un piston (162) disposé d'un côté dudit marteau à l'opposé de ladite tête de marteau (36) ;

lesdits moyens d'entraînement de marteau comprennent un cylindre (156) pour recevoir ledit piston, et une vanne (158) pour commander l'air comprimé d'activation dudit cylindre ;

lesdits moyens de rappel comprennent un ressort de rappel (148) dont une extrémité est fixée audit marteau ; et

lesdits moyens (49,55) de réception de la sortie desdits moyens de détection (4) sont prévus pour ouvrir ladite vanne (158) de manière à fournir ledit air comprimé audit cylindre pour appliquer la pression dudit air comprimé audit cylindre afin d'entraîner ledit marteau vers l'objet à inspecter, et, lorsque lesdits moyens (49,55) de réception de la sortie desdits moyens de détection reçoivent le signal de détection de contact fourni par lesdits moyens de détection, lesdits moyens de réception de la sortie desdits moyens de détection commandent la fermeture de ladite vanne (158).

8. Appareil suivant la revendication 1,

dans lequel ledit dispositif d'entraînement de marteau (44) comporte deux jambes (133) qui tiennent ledit marteau entre elles et qui ont des parties d'extrémité avant respectives mutuellement convergentes, et ladite tête de marteau (36) est agencée de sorte qu'un point où ladite tête de marteau frappe l'objet à inspecter se trouve sur une ligne reliant mutuellement les extrémités avant desdites deux jambes.

FIG. 1

FIG. 2

(a)  (b)  (c)  (d)  (e)

FIG. 3-A

FIG. 3-B

FIG. 3-C

FIG. 3-D

FIG. 4

FIG. 5

FIG. 6

FIG. 7

FIG. 9

FIG. 8

FIG. 10

FIG. 11

EP 0 351 430 B1

FIG. 12

FIG. 13

25

FIG. 14